# EUROPEAN PATENT APPLICATION

(11) **EP 4 787 552 A1**
(43) Date of publication of application: **05.08.2026**
(21) Application number: 24888936.2
(22) Date of filing: 02.10.2024
(51) Int. Cl.: H01M 10/658, H01M 50/242, H01M 50/105, H01M 50/211, B32B 7/027, B32B 7/12, B32B 19/04

(54) **THERMAL PROPAGATION BLOCKING ASSEMBLY AND BATTERY MODULE COMPRISING THERMAL PROPAGATION BLOCKING ASSEMBLY**

(30) Priority: 07.11.2023 KR 20230152485
(71) Applicant: SK On Co., Ltd., Seoul 03161 (KR)
(72) Inventor: JANG, Sun-Ho, Daejeon 34124 (KR); JIN, Shan-Shan, Daejeon 34124 (KR)
(74) Representative: Prüfer & Partner mbB Patentanwälte · Rechtsanwälte
(86) International application number: PCT/KR2024/014964
(87) International publication number: WO 2025/100741

(57) **Abstract**

A battery module of the present disclosure may comprise: multiple battery cells; and a thermal propagation blocking assembly positioned between at least some of the multiple battery cells. The heat propagation blocking assembly may comprise: a thermal insulation layer containing silica aerogel; a fireproof member comprising a first fireproof sheet, positioned on a first surface of the thermal insulation layer, and a second fireproof sheet, positioned on a second surface of the thermal insulation layer opposite to the first surface; and a buffer member comprising a first buffer pad, positioned on the first fireproof sheet, and a second buffer pad, positioned on the second fireproof sheet.

## Description

### Technical Field

The present disclosure relates to a thermal propagation blocking assembly and a battery module including the thermal propagation blocking assembly.

### Background Art

Unlike a primary battery, a secondary battery may be charged and discharged, so the secondary battery may be applied to various fields such as digital cameras, mobile phones, laptops, hybrid cars, electric cars, and energy storage systems (ESS). The secondary battery may be a lithium-ion battery, a nickel-cadmium battery, a nickel-metal hydride battery, or a nickel-hydrogen battery.

Secondary batteries are manufactured as flexible pouch-type battery cells or rigid square or cylindrical can-type battery cells. A plurality of battery cells may be formed into a cell assembly in a stacked form.

The cell assembly may be disposed inside a case to form a battery module, and a plurality of battery modules may be disposed inside a pack frame to form a battery pack. The battery pack may be used in various structures, such as vehicles, energy storage systems, or the like.

### Summary of Invention

### Technical Problem

A battery device (e.g., a battery module) may include a cell assembly including a plurality of battery cells. Heat, gas, or flames generated in one battery cell, among the plurality of battery cells, may propagate to other battery cells, resulting in thermal runaway or thermal propagation.

According to an aspect of the present disclosure, a thermal propagation blocking assembly including a thermal insulation layer that can delay thermal propagation between battery cells and a battery module including the same, may be provided.

According to an aspect of the present disclosure, a thermal propagation blocking assembly including a buffer pad that can reduce deformation of a cell assembly caused by swelling of a battery cell and a battery module including the same, may be provided.

According to an aspect of the present disclosure, a thermal propagation blocking assembly including a fireproof member that can reduce damage to a thermal insulation layer and a battery module including the same, may be provided.

A battery module of the present disclosure may be widely applied in green technology fields such as electric vehicles, battery charging stations, and solar and wind power generation using batteries. In addition, the battery module of the present disclosure may be used in eco-friendly electric vehicles, hybrid vehicles, and the like, to prevent climate change by suppressing air pollution and greenhouse gas emissions.

### Solution to Problem

According to the present disclosure, a battery module may include: a plurality of battery cells; and a thermal propagation blocking assembly disposed between at least a portion of the plurality of battery cells, wherein the thermal propagation blocking assembly may include a thermal insulation layer including silica aerogel, a fireproof member including a first fireproof sheet disposed on a first surface of the thermal insulation layer, and a second fireproof sheet disposed on a second surface of the thermal insulation layer, opposite to the first surface, and a buffer member including a first buffer pad disposed on the first fireproof sheet, and a second buffer pad disposed on the second fireproof sheet.

In an embodiment, the thermal propagation blocking assembly may include a support member including a receiving space for accommodating the thermal insulation layer, the fireproof member, and the buffer member, and a frame surrounding the receiving space.

In an embodiment, the support member may include a protrusion extending from the frame, and surrounding edges of the thermal insulation layer, the fireproof member, and the buffer pad.

In an embodiment, the support member may include a buffer space formed inside the frame.

In an embodiment, the support member may include at least one of polyvinyl chloride, natural rubber, ethylene propylene, nitrile rubber, and polychloroprene.

In an embodiment, first thermal conductivity of the thermal insulation layer may be lower than second thermal conductivity of the fireproof member.

In an embodiment, the first thermal conductivity of the thermal insulation layer may be less than 0.02 W/mK, and the second thermal conductivity of the fireproof member may be less than 0.3 W/mK.

In an embodiment, a first thickness of the thermal insulation layer may be greater than or equal to a second thickness of the first fireproof sheet or the second fireproof sheet.

In an embodiment, the fireproof member may include mica.

In an embodiment, the buffer member may include at least one of polyurethane, silicone, or rubber.

In an embodiment, the thermal propagation blocking assembly may further include an adhesive layer including: a first adhesive layer disposed between the first buffer pad and the first fireproof sheet, a second adhesive layer disposed between the first fireproof sheet and the thermal insulation layer, a third adhesive layer disposed between the second fireproof sheet and the thermal insulation layer, and a fourth adhesive layer disposed between the second fireproof sheet and the second buffer pad.

In an embodiment, each of the plurality of battery cells may include a pouch including an electrode assembly, an electrode receiving portion for accommodating the electrode assembly, and a sealing portion for sealing at least a portion of the perimeter of the electrode receiving portion. The buffer member may face the electrode receiving portion.

In an embodiment, the thermal propagation blocking assembly may surround at least a portion of each of the plurality of battery cells.

According to the present disclosure, a thermal propagation blocking assembly may include a thermal insulation layer including silica aerogel, a fireproof member including a first fireproof sheet covering a first surface of the thermal insulation layer, and a second fireproof sheet covering a second surface of the thermal insulation layer, opposite to the first surface, and a buffer member including a first buffer pad covering the first fireproof sheet and a second buffer pad covering the second fireproof sheet.

In an embodiment, the thermal propagation blocking assembly may further include a support member including a receiving space for accommodating the thermal insulation layer, the fireproof member, and the buffer member, and a frame surrounding the receiving space. The support member may include a protrusion extending from the frame, and surrounding edges of the thermal insulation layer, the fireproof member, and the buffer pad.

In an embodiment, first thermal conductivity of the thermal insulation layer may be lower than second thermal conductivity of the fireproof member.

In an embodiment, the first thermal conductivity of the thermal insulation layer may be less than 0.02 W/mK, and the second thermal conductivity of the fireproof member may be less than 0.3 W/mK.

In an embodiment, the fireproof member may include mica.

In an embodiment, the thermal propagation blocking assembly may further include an adhesive layer including: a first adhesive layer disposed between the first buffer pad and the first fireproof sheet, a second adhesive layer disposed between the first fireproof sheet and the thermal insulation layer, a third adhesive layer disposed between the second fireproof sheet and the thermal insulation layer, and a fourth adhesive layer disposed between the second fireproof sheet and the second buffer pad.

According to the present disclosure, a battery pack may include at least one battery module, and a pack frame accommodating the at least one battery module, wherein the at least one battery module may include a plurality of battery cells and a thermal propagation blocking assembly disposed between at least a portion of the plurality of battery cells. The thermal propagation blocking assembly may include a thermal insulation layer including silica aerogel, a fireproof member including a first fireproof sheet covering a first surface of the thermal insulation layer and a second fireproof sheet covering a second surface of the thermal insulation layer, opposite to the first surface, and a buffer member including a first buffer pad covering the first fireproof sheet and a second buffer pad covering the second fireproof sheet.

### Advantageous Effects of Invention

As set forth above, according to an embodiment of the present disclosure, thermal propagation between battery cells may be prevented or delayed.

According to an embodiment of the present disclosure, expansion force caused by a swelling phenomenon of the battery cell may be absorbed, so that deformation of a cell assembly may be prevented or reduced.

According to an embodiment of the present disclosure, damage to a thermal insulation layer may be reduced.

### Brief description of drawings

FIG. 1 is a perspective view of a battery cell according to an embodiment.
FIG. 2 is a perspective view of a battery module according to an embodiment.
FIG. 3 is a perspective view of a cell assembly according to an embodiment.
FIG. 4 is a perspective view of a thermal blocking assembly according to an embodiment.
FIG. 5 is an exploded perspective view of a thermal blocking assembly according to an embodiment.
FIG. 6 is a cross-sectional perspective view, taken along line A-A' of FIG. 4 according to an embodiment.
FIG. 7 is an enlarged view of region A of FIG. 6 according to an embodiment.
FIG. 8 is a perspective view of a support member according to an embodiment.
FIG. 9 is an exploded perspective view of a thermal blocking assembly according to an embodiment.
FIG. 10 is an exploded perspective view of a battery pack according to an embodiment.

### Mode for Invention

Hereinafter, the present disclosure will be described in detail with reference to the attached drawings. However, this is merely exemplary and the present disclosure is not limited to the specific embodiments exemplarily described.

The terms or words used in this specification and claims described below are not to be construed as limited to the usual or dictionary meanings. The inventor will interpret the terms or words in the sense and concept that are consistent with the technical idea of the present disclosure based on the principle that the inventor can appropriately define the concept of the term in order to explain the inventor's own invention in the best manner.

Accordingly, it will be understood that the embodiments described in this specification and the configurations illustrated in the drawings are only the most preferred embodiments of the present disclosure and do not represent all of the technical ideas of the present disclosure, and that there may be various equivalents and modified examples that can replace the same at the time of this application.

Detailed descriptions of functions and configurations known in the art that may obscure the gist of the present disclosure will be omitted. In the attached drawings, some components are exaggerated, omitted, or schematically illustrated, and the size of each component does not entirely reflect the actual size thereof.

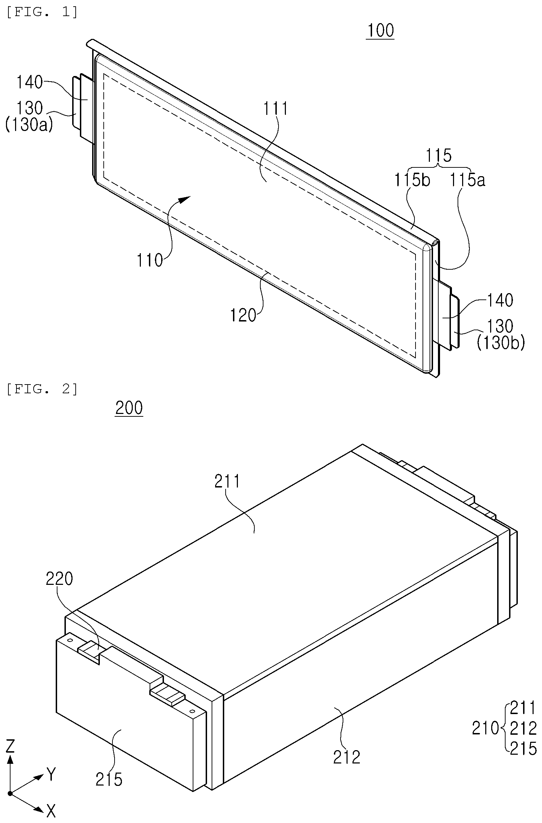

FIG. 1 is a perspective view of a battery cell according to an embodiment.

Referring to FIG. 1, a battery cell 100 may include a pouch 110, an electrode assembly 120, and an electrode tab 130. The battery cell 100 may be a secondary battery. For example, the battery cell 100 may be a lithium ion battery, but an embodiment thereof is not limited thereto. For example, the battery cell 100 may be a nickel-cadmium electric, a nickel-metal hydride battery, or a nickel-hydrogen battery, that can be charged and discharged.

The pouch 110 may form at least a portion of the exterior of the battery cell 100. The pouch 110 may include an electrode receiving portion 111 for accommodating an electrode assembly 120 and a sealing portion 115 for sealing at least a portion of the perimeter of the electrode receiving portion 111. The electrode receiving portion 111 may provide a space in which the electrode assembly 120 and an electrolyte are accommodated.

The sealing portion 115 may be formed by bonding at least a portion of the perimeter of the pouch 110. The sealing portion 115 may be formed in the shape of a flange extending outwardly from the electrode receiving portion 111, which is formed in the shape of a container, and may be disposed along at least a portion of an outer peripheral portion of the electrode receiving portion 111. In an embodiment, the sealing portion 115 may include a first sealing portion 115a in which an electrode tab 130 is located and a second sealing portion 115b in which the electrode tab 130 is not located. A portion of the electrode tab 130 may be withdrawn or exposed to the outside of the pouch 110. To increase a sealing degree of the first sealing portion 115a and simultaneously secure an electrical insulation state, in a position in which the electrode tab 130 is withdrawn, the electrode tab 130 may be covered by an insulating film 140. The insulating film 140 may be formed of a film material, thinner than that of the electrode tab 130, and may be attached to both surfaces of the electrode tab 130.

In an embodiment, the electrode tabs 130 may be disposed on both sides of the battery cell 100 in a longitudinal direction (Y-axis direction) to face in opposite directions. For example, the electrode tab 130 may include a cathode lead 130a of a first polarity (e.g., positive) facing one side of the battery cell 100 in the longitudinal direction and an anode lead 130b of a second polarity (e.g., negative) facing the other side thereof in the longitudinal direction. In the embodiment illustrated in FIG. 1, the sealing portion 115 may include two first sealing portions 115a on which electrode tabs 130 are disposed and one second sealing portion 115b on which electrode tabs 130 are not disposed. The electrode tab 130 may be referred to as an electrode lead.

The direction in which the electrode tab 130 is located may be optionally designed. In an embodiment (e.g., FIG. 1), the electrode tab 130 may include a cathode lead 130a and an anode lead 130b located opposite the cathode lead 130a with respect to the electrode assembly 120. In FIG. 1, electrode tabs 130 disposed on both sides of the battery cell 100 in the longitudinal direction (e.g., Y-axis direction) to face in opposite directions, are illustrated, but structures of the electrode tabs 130 are not limited thereto. For example, two electrode tabs 130 may be arranged substantially parallel in the longitudinal direction (e.g., Y-axis direction) of the battery cell 100.

Meanwhile, the pouch 110 is not limited to a structure in which a single sheet of exterior material is folded as illustrated in FIG. 1 to form sealing portions 115 on three sides thereof.

In an embodiment of the present disclosure, at least a portion of the sealing portion 115 may be formed in a folded shape at least once. By folding at least a portion of the sealing portion 115, the bonding reliability of the sealing portion 115 may be improved, and an area of the sealing portion 115 may be minimized. In an embodiment, the second sealing portion 115b in which the electrode tab 130 is not disposed among the sealing portions 115 may be fixed by an adhesive member (not shown) after being folded twice. An angle at which the second sealing portion 115b is bent or the number of times of the second sealing portion 115b being bent may be changed. For example, in an embodiment not illustrated, the second sealing portion 115b may be folded 90°, relative to the first sealing portion 115a.

The electrode assembly 120 may include a cathode plate, an anode plate, and a separator. The separator may prevent contact between the cathode plate and the anode plate. A person skilled in the art will understand that the electrode assembly 120 may be manufactured using various methods. According to exemplary embodiments, the cathode, the anode, and the separator may be repeatedly disposed to form an electrode assembly. In some embodiments, the electrode assembly may be winding-type, stacking-type, zigzag folding (z-folding)-type, or stack-folding-type.

The structure of the battery cell 100 illustrated in FIG. 1 is exemplary. For example, in FIG. 1, the battery cell 100 is described as a pouch-type battery cell, but the structure of the battery cell 100 is not limited thereto. For example, the battery cell 100 may be a cylindrical battery cell or a prismatic battery cell.

FIG. 2 is a perspective view of a battery module according to an embodiment.

Referring to FIG. 2, a battery module 200 may include a module housing 210 and a busbar assembly 220.

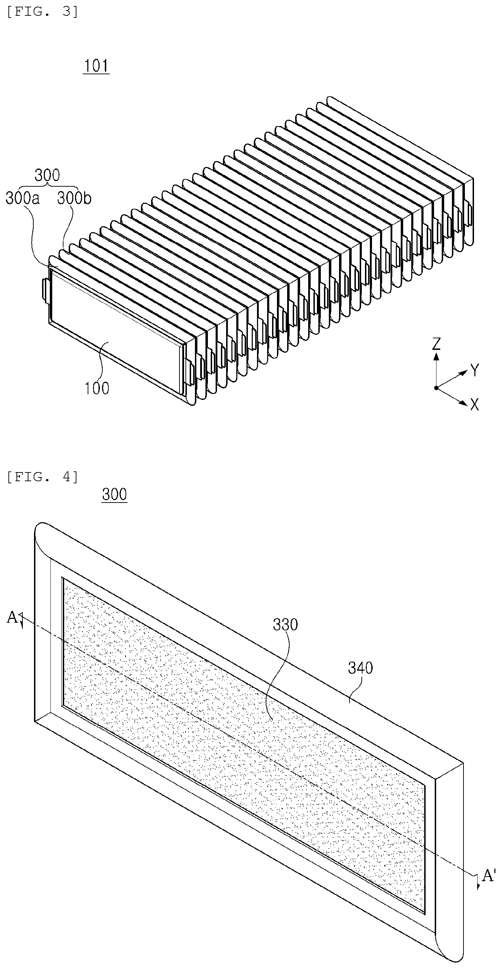

The module housing 210 forms at least a portion of the exterior of the battery module 200, and can form a receiving space for accommodating a cell assembly (e.g., cell assembly 101 of FIG. 3) including a plurality of battery cells (e.g., 100 of FIG. 1) and/or a busbar assembly 220. For example, the module housing 210 may include a cover 211 covering the cell assembly 101 and a receiving portion 212 surrounding a lower surface and a side surface of the cell assembly 101. In an embodiment, the cover 211 may be referred to as an upper cover.

The receiving portion 212 may include a main plate covering the lower surface of the cell assembly 101 and a plurality of side wall members covering at least a portion of the side surface of the cell assembly 101. At least a portion of the receiving space may be surrounded by a main plate, a side wall member, and an end plate 215.

The module housing 210 may include an end plate 215 covering a portion of the side surface of the cell assembly 101. In an embodiment, the end plate 215 may be connected to an end of the receiving portion 212 in the longitudinal direction (e.g., Y-axis direction). The end plate 215 may cover a portion of the side surface of the cell assembly 101 and the busbar assembly 220. The end plate 215 may include a hole for accommodating a connection terminal of the busbar assembly 220.

According to an embodiment, the module housing 210 may be formed of a material having high thermal conductivity, such as metal. For example, the module housing 210 may be formed of aluminum. However, the material of the module housing 210 is not limited thereto. According to another embodiment, the module housing 210 may be formed of a polymer. The module housing 210 may be referred to as a housing, a case, or a module case.

The busbar assembly 220 may include an electrically conductive busbar (not shown) electrically connected to an electrode tab (e.g., electrode tab 130 of FIG. 1) of a battery cell 100 and a busbar frame (not shown) supporting the busbar. The busbar assembly 220 may include at least one connection terminal for electrical connection with the outside. The electrode tab 130 of the battery cell 100 may be electrically connected to the outside of the battery module 200 through the busbar and the connection terminal.

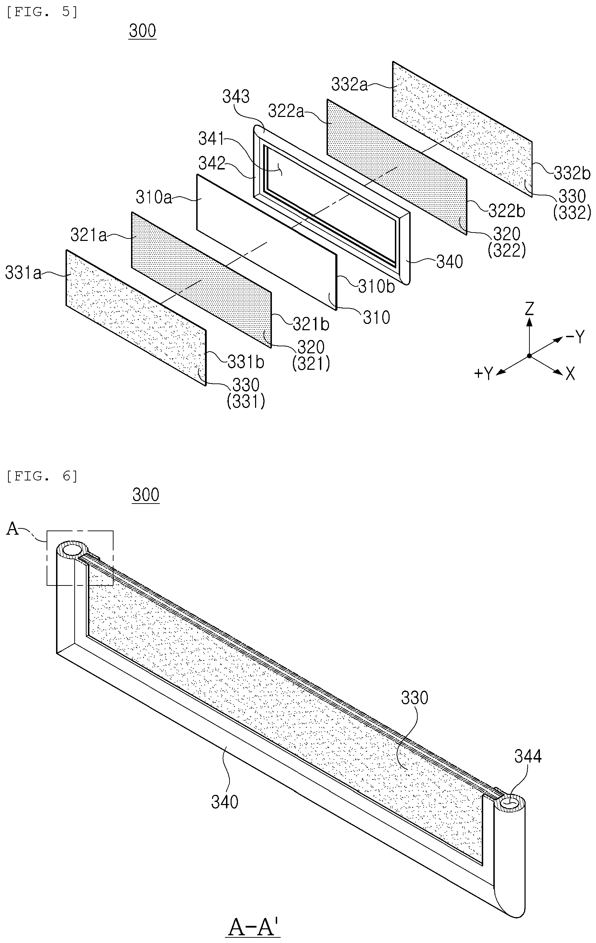

FIG. 3 is a perspective view of a cell assembly according to an embodiment. FIG. 4 is a perspective view of a thermal blocking assembly according to an embodiment. FIG. 5 is an exploded perspective view of a thermal blocking assembly according to an embodiment.

When including FIG. 3, FIG. 4, and/or FIG. 5, a cell assembly 101 may include a plurality of battery cells 100 and a plurality of thermal propagation blocking assemblies 300. The description of the battery cell 100 of FIG. 1 may be applied to the battery cell 100 of FIG. 3.

The cell assembly 101 may substantially have a cuboidal shape. In an embodiment, the cell assembly 101 may be referred to as a cell stack.

The thermal propagation blocking assembly 300 may be disposed between at least a portion of the plurality of battery cells 100. In an embodiment, the cell assembly 101 may include battery cells 100, alternately stacked, and a thermal propagation blocking assembly 300. For example, the thermal propagation blocking assembly 300 may include a first thermal propagation blocking assembly 300a and a second thermal propagation blocking assembly 300b, spaced apart from the first thermal propagation blocking assembly 300a. A single battery cell 100 may be disposed between the first thermal propagation blocking assembly 300a and the second thermal propagation blocking assembly 300b. However, as an example, in other embodiments, the thermal propagation blocking assembly 300 may be disposed between at least a portion of the plurality of battery cells 100. For example, the number of battery cells 100 included in a unit cell in which the thermal propagation blocking assembly 300 is disposed may be optional.

The battery cell 100 included in the cell assembly 101 is not limited to the pouch-type battery cell 100 of FIG. 1. According to exemplary embodiments, the cell assembly 101 may include a cylindrical battery cell, a prismatic battery cell, and/or a pouch-type battery cell.

In an embodiment, the battery cell 100 may be assembled by being inserted (e.g., press-fitting) between a plurality of thermal propagation blocking assemblies 300. In another embodiment, the battery cell 100 and the thermal propagation blocking assembly 300 may be joined to each other using adhesive tape (not shown) or an adhesive (not shown).

The thermal propagation blocking assembly 300 may prevent or delay thermal propagation and/or thermal runaway. For example, the thermal propagation blocking assembly 300 may delay the diffusion of heat, gas, and/or flames within a battery module 200 by blocking or delaying the propagation of heat, gas, and/or flames from one battery cell 100 to another battery cell 100. The thermal propagation blocking assembly 300 may be referred to as a thermal barrier or a thermal blocking structure.

The thermal propagation blocking assembly 300 may include a thermal insulation layer 310, a fireproof member 320, and a buffer member 330.

The thermal insulation layer 310 may block or reduce thermal propagation between adjacent battery cells 100. The thermal insulation layer 310 may be formed of an insulating material. For example, the thermal insulation layer 310 may include silica aerogel. First thermal conductivity of the thermal insulating layer 310 may be less than 0.02 W/(m·K). In an embodiment, the silica aerogel may include silicon dioxide. A size of silica aerogel particles may be about 10 to 100 µm. Each silica aerogel particle may contain micropores.

The thermal insulation layer 310 may substantially be formed in the shape of a plate. For example, the thermal insulation layer 310 may include a first surface 310a and a second surface 310b, opposite to the first surface 310b.

The thermal insulation layer 310 may be provided as at least one layer. For example, a thermal propagation blocking assembly 300 including one insulation layer 310 is illustrated in the present disclosure, but in other embodiments, the thermal propagation blocking assembly 300 may include a plurality of stacked thermal insulation layers 310.

The fireproof member 320 may protect the thermal insulation layer 310 and block or reduce thermal propagation between adjacent battery cells 100. The fireproof member 320 may be formed of a material having heat resistance. For example, the fireproof member 320 may include a material having higher fire resistance than the thermal insulation layer 310. In an embodiment, a mass loss of the fireproof member 320 at a temperature of 500°C may be less than 1%. For example, the fireproof member 320 may include mica. In an embodiment, the fireproof member 320 may be substantially formed of a material having thermal insulation (e.g., mica). First thermal conductivity of the thermal insulation layer 310 may be lower than second thermal conductivity of the fireproof member 320. For example, the fireproof member 320 may have a thermal conductivity of less than 0.3 W/(m·K). However, the fireproof member 320 may be replaced with a material having heat resistance and thermal insulation, such as silica wool other than mica. The fireproof member 320 may have heat resistance. In an embodiment, the fireproof member 320 may maintain stable properties for a specified time at a temperature of 800°C or higher.

The fireproof member 320 may cover at least a portion of the thermal insulation layer 310. For example, the fireproof member 320 may include a first fireproof sheet 321 covering a first surface 310a of the thermal insulation layer 310 and a second fireproof sheet 322 covering a second surface 310b of the thermal insulation layer 310. For example, the first fireproof sheet 321 may be disposed above the first surface 310 of the thermal insulation layer 310, and the second fireproof sheet 322 may be disposed above the second surface 310b of the thermal insulation layer 310.

Each of the first fireproof sheet 321 and the second fireproof sheet 322 may be formed substantially in the shape of a plate. For example, the first fireproof sheet 321 may include a first fireproof surface 321a facing the first buffer pad 331 and a second fireproof surface 321b opposite to the first fireproof surface 321a and facing the thermal insulation layer 310. The second fireproof sheet 322 may include a third fireproof surface 322a facing the thermal insulation layer 310 and a fourth fireproof surface 322b opposite to the third fireproof surface 322a and facing the second buffer pad 332. The thermal insulation layer 310 may be disposed between the first fireproof sheet 321 and the second fireproof sheet 322. By the fireproof member 320 covering at least a portion of the thermal insulation layer 310, structural collapse of the thermal insulation layer 310 due to thermal decomposition in a thermal runaway situation may be prevented by the fireproof member 320. For example, the fire resistance of the thermal insulation layer 310 may be reduced by the thermal insulation layer 310 having a gel form. The fireproof member 320 may maintain a thermal insulation effect of the thermal insulation layer 310 by protecting the thermal insulation layer 310 from flames and/or gases.

The thermal insulation layer 310 and the fireproof member 320 may maintain the thermal insulation effect of the thermal propagation blocking assembly 300, and have a shape for maintaining the lightweight and fire resistance of the thermal propagation blocking assembly 300. For example, a first thickness of the thermal insulation layer 310 may be thicker than a second thickness of the second fireproof sheet 322. A distance between the first surface 310a and the second surface 310b of the thermal insulation layer 310 may be referred to as a first thickness of the thermal insulation layer 310. A distance between the first fireproof surface 321a and the second fireproof surface 321b of the first fireproof sheet 321 or a distance between the third fireproof surface 322a and the fourth fireproof surface 322b of the second fireproof sheet 322 may be referred to as a second thickness of the fireproof member 320 (e.g., the first fireproof sheet 321 or the second fireproof sheet 322).

The buffer member 330 may absorb at least a portion of expansion pressure caused by a swelling phenomenon of the battery cell 100. The buffer member 330 may include an elastic material. For example, the buffer member 330 may include at least one of polyurethane, silicone, or rubber. The electrode receiving portion 111 of the battery cell 100 may be pressurized by elastic force of the buffer member 330. By pressurizing the electrode receiving portion 111, the swelling phenomenon of the battery cell 100 may be reduced. In an embodiment, a compression set value of the buffer member 330 may be less than 10%. In an embodiment, density of the buffer member 330 may be less than 350 kg/m³.

The buffer member 330 may be disposed on the fireproof member 320. For example, the buffer member 330 may include a first buffer pad 331 covering at least a portion of the first fireproof sheet 321 and a second buffer pad 332 covering at least a portion of the second fireproof sheet 322. The first buffer pad 331 may be disposed above the first fireproof sheet 321. The second buffer pad 332 may be disposed above the second fireproof sheet 322. In an embodiment, the thermal propagation blocking assembly 300 may include a first buffer pad 331, a first fireproof sheet 321, a thermal insulation layer 310, a second fireproof sheet 322, and a second buffer pad 332, sequentially stacked in a longitudinal direction (Y-axis direction).

Each of the first buffer pad 331 and the second buffer pad 332 may be formed substantially in the shape of a plate. For example, the first buffer pad 331 may include a first buffer surface 331a toward the outside of the thermal propagation blocking assembly 300 and a second buffer surface 331b, opposite to the first buffer surface 331a and facing the first fireproof surface 321a of the first fireproof sheet 321. The second buffer pad 332 may include a third buffer surface 332a facing a fourth fireproof surface 322b of the second fireproof sheet 322, and a fourth buffer surface 332b, opposite to the third buffer surface 332a and toward the outside of the thermal propagation blocking assembly 300. Each of the first buffer surface 332a and the fourth buffer surface 332b may face or contact a pouch 110 of the battery cell 100. By pressurizing the electrode receiving portion 111 of the pouch 110 with the buffer pads 331 and 332, a swelling phenomenon of the battery cell 100 may be reduced. The first fireproof sheet 321 may be disposed between the thermal insulation layer 310 and the first buffer pad 331. The second fireproof sheet 322 may be disposed between the thermal insulation layer 310 and the second buffer pad 332.

The thermal propagation blocking assembly 300 may include a support member 340. The support member 340 may accommodate a thermal insulation layer 310, a fireproof member 320, and a buffer member 330. For example, the support member 340 may include a receiving space 341 for accommodating the thermal insulation layer 310, the fireproof member 320, and the buffer member 330, and frames 342 and 343 surrounding at least a portion of the receiving space 341. For example, the support member 340 may include a first frame 342 (e.g., a vertical frame) and a second frame 343 (e.g., a horizontal frame) providing a closed curve shape. The receiving space 341 may be an empty space defined by the first frame 342 and the second frame 343. In an embodiment, the first frame 342 and the second frame 343 may be formed integrally. In another embodiment, the first frame 342 and the second frame 343 may be connected to each other using an adhesive (not shown). In an embodiment, the support member 340 may be referred to as a gasket.

The support member 340 may be manufactured from an elastic nonconductive material. For example, the support member 340 may include at least one of polyvinyl chloride, natural rubber, ethylene propylene, nitrile rubber, and polychloroprene.

A structure of the support member 340 is further described below.

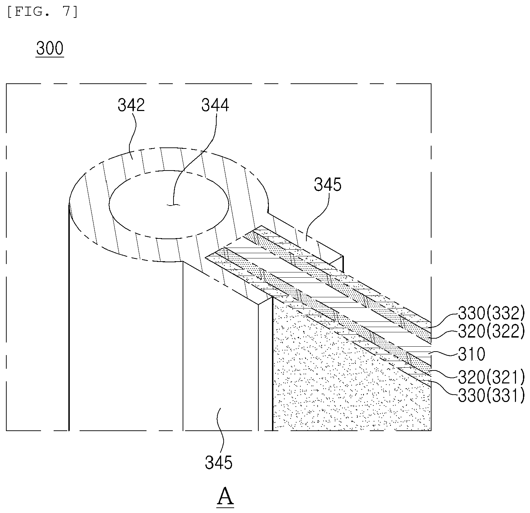

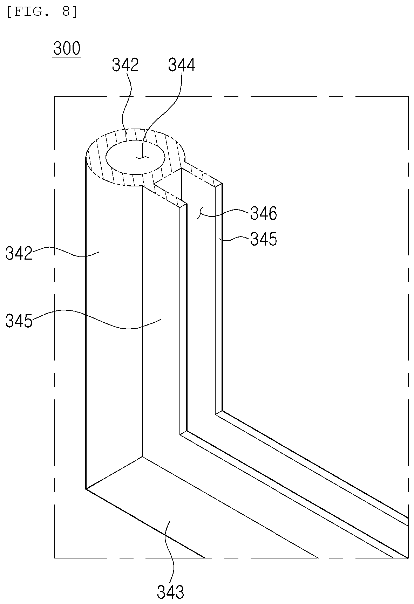

FIG. 6 is a cross-sectional perspective view along line A-A' of FIG. 4 according to an embodiment. FIG. 7 is an enlarged view of region A of FIG. 6 according to an embodiment. FIG. 8 is a perspective view of a support member according to an embodiment.

Referring to FIG. 6, FIG. 7, and/or FIG. 8, a thermal propagation blocking assembly 300 may include a thermal insulation layer 310, a fireproof member 320, a buffer member 330, and a support member 340. The description of the thermal propagation blocking assembly 300, the thermal insulation layer 310, the fireproof member 320, the buffer member 330, and the support member 340 of FIG. 3, FIG. 4, and/or FIG. 5 may be applied to the thermal propagation blocking assembly 300, the thermal insulation layer 310, the fireproof member 320, the buffer member 330, and the support member 340 of FIG. 6, FIG. 7, and/or FIG. 8.

The support member 340 may include a buffer space 344. The buffer space 344 may be an empty space formed inside a frame (e.g., a first frame 342 and/or a second frame 343). In an embodiment, the buffer space 344 may allow deformation of the frames 342 and 343. For example, a gap between the thermal propagation blocking assembly 300 and the pouch 110 of the battery cell 100 may be reduced by deforming the buffer space 344 based on the shape deformation (e.g., swelling) of the battery cell 100. In another example, when the thermal insulation layer 310, fireproof member 320, and buffer member 330 are inserted into the receiving space 341 of the support member 340, the buffer space 344 may be deformed, so that an interval between the protrusions 345 may be increased, thereby increasing the ease of assembly. In an embodiment, a weight of the frames 342 and 343 may be reduced due to the buffer space 344. Due to the reduction in weight of the frames 342 and 343, the weight of the cell assembly 101 may be reduced.

The support member 340 may include a protrusion 345 extending from the frames 342 and 343. The protrusion 345 may prevent the thermal insulation layer 310, the fireproof member 320, and the buffer member 330 from deviating. For example, the support member 340 may include a pair of protrusions 345, and the thermal insulation layer 310, the fireproof member 320, and the buffer member 330 may be inserted between the pair of protrusions 345 and coupled to the frames 342 and 343. The protrusion 345 may surround edges of the thermal insulation layer 310, the fireproof member 320, and the buffer member 330.

The protrusion 345 may form a slit 346. The slit 346 may be referred to as a portion of the receiving space 341 (e.g., an edge region of the receiving space 341). The slit 346 may accommodate at least a portion of the edges of the thermal insulation layer 310, the fireproof member 320, and the buffer member 330.

The support member 340 may seal at least a portion of a space between the battery cells 100. The propagation of flames, gases, and/or conductive particles between the battery cells 100 may be reduced or prevented by the support member 340. In an embodiment, the frames 342 and 343 may face or contact a sealing portion (e.g., the sealing portion 115 of FIG. 1). In an embodiment, the first frame 342 may face or contact an electrode tab (e.g., the electrode tab 130 of FIG. 1).

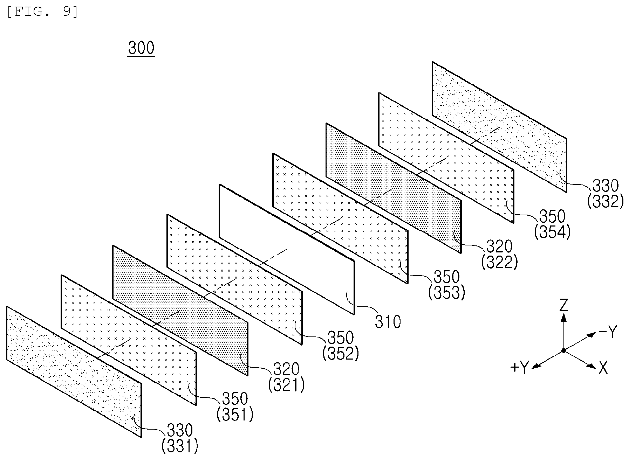

FIG. 9 is an exploded perspective view of a thermal propagation blocking assembly according to an embodiment.

Referring to FIG. 9, a thermal propagation blocking assembly 300 may include a thermal insulation layer 310, a fireproof member 320, a buffer member 330, and an adhesive layer 350.

The description of the thermal propagation blocking assembly 300, insulation layer 310, fireproof member 320, and buffer member 330 of FIG. 3, FIG. 4, and/or FIG. 5 may be applied to the thermal propagation blocking assembly 300, the thermal insulation layer 310, the fireproof member 320, and the buffer member 330 of FIG. 9.

The thermal propagation blocking assembly 300 may include an adhesive layer 350 for connecting the thermal insulation layer 310, the fireproof member 320, and the buffer member 330, respectively. For example, the adhesive layer 350 may include a first adhesive layer 351 disposed between the first buffer pad 331 and the first fireproof sheet 321, a second adhesive layer 352 disposed between the first fireproof sheet 321 and the thermal insulation layer 310, a third adhesive layer 353 disposed between the second fireproof sheet 322 and the thermal insulation layer 310, and a fourth adhesive layer 354 disposed between the second fireproof sheet 322 and the second buffer pad 332.

The adhesive layer 350 may include adhesive tape or an adhesive. For example, the adhesive layer 350 may include a material having adhesive properties, such as a silicone-based, acrylic-based, rubber-based, hot-melt-based, epoxy-based, PSA-based, or urethane-based material. The adhesive layer 350 may be a substrate type, a non-substrate type, or a pressure-sensitive adhesive (PSA) hot-melt type adhesive tape. However, the material of the adhesive layer 350 may be used without limitation as long as it allows for adhesion of the thermal insulation layer 310, the fireproof member 320, and the buffer member 330.

In an embodiment (e.g., FIG. 9), a support member (e.g., the support member 340 of FIG. 5) may be excluded from a thermal blocking assembly 300 including an adhesive layer 350. In an embodiment not illustrated, the thermal blocking assembly 300 may include an adhesive layer 350 together with the support member 340. For example, the support member 340 may accommodate the support member 340 together with the thermal insulation layer 310, the fireproof member 320, and the buffer member 330.

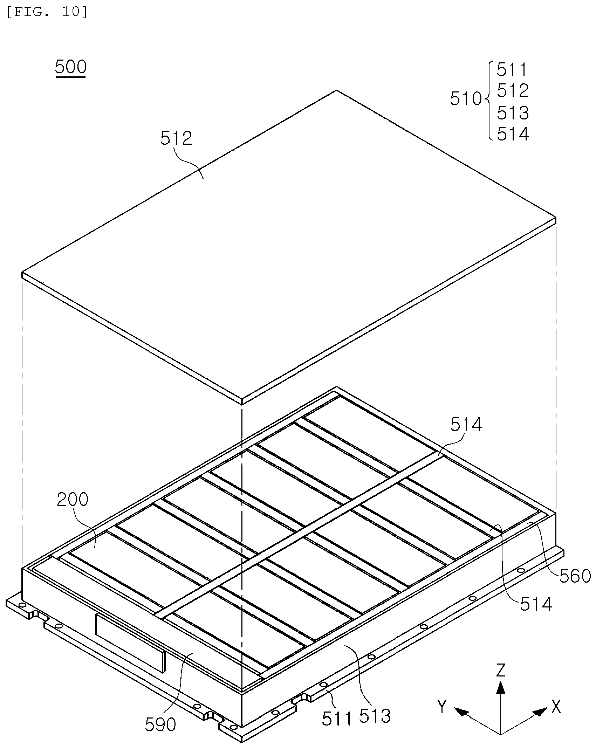

FIG. 10 is an exploded perspective view of a battery pack according to an embodiment.

Referring to FIG. 10, a battery pack 500 may include at least one battery module 200 and a pack frame 510 accommodating the at least one battery module 200. The description of the battery module 200 described in FIG. 2 may be applied to the battery module 200 of FIG. 10. For example, the battery module 200 of FIG. 10 may accommodate a cell assembly (e.g., cell assembly 101 of FIG. 3) including the battery cell 100 of FIG. 3 and the thermal propagation blocking assembly 300.

The pack frame 510 may accommodate a component of the battery pack 500 (e.g., a battery module 200). The pack frame 510 may include a bottom member 511 supporting the battery module 200, a pack cover 512 covering the battery module 200, and a pack side wall 513 connecting the bottom member 511 and the pack cover 512. The bottom member 511 may support the receiving portion (e.g., the receiving portion 212 of FIG. 2) of the battery module 200.

The pack frame 510 may include a partition wall 514 crossing at least a portion of the plurality of battery modules 200. For example, a receiving space of the pack frame 510 may be divided into a plurality of spaces by the partition wall 514. The partition wall 514 may be installed across the receiving space to reinforce the rigidity of the pack frame 510. In an embodiment, at least a portion of the plurality of partition walls 514 may include a venting hole to guide a path of gas and/or flames generated from the battery module 200.

In an embodiment, the battery pack 500 may include a duct member 560. The duct member 560 may include a flow space to provide a path for gas and/or flames discharged from the battery module 200. The duct member 560 may be disposed within the pack frame 510. A flow space of the duct member 560 may be connected to the venting hole of the partition wall 514. For example, gas and/or flames generated in a battery cell of the battery module 200 (e.g., battery cell 100 of FIG. 1) may be transferred to the outside of the battery pack 500 by passing through the venting hole formed in the partition wall 514 and the flow space of the duct member 560.

The battery pack 500 may include a battery control unit 590 for controlling the battery module 200. The battery control unit 590 may be disposed within the pack frame 510. The battery control unit 590 may include a battery management system BMS. The configuration of the battery control unit 590 is known in various forms, so a detailed description thereof is omitted. In an embodiment, the battery control unit 590 may be referred to as a processor.

The contents described above is merely an example of applying the principles of the present disclosure, and other configurations may be further included without departing from the scope of the present disclosure.

While example embodiments have been shown and described above, the scope of the present disclosure is not limited thereto, and it will be apparent to those skilled in the art that modifications and variations could be made without departing from the scope of the present disclosure as defined by the appended claims. For example, the present disclosure may be implemented by deleting some of the components in the above-described embodiments, and the respective embodiments may be implemented in combination with each other.

Aspect 1) A battery module may include a plurality of battery cells; and a thermal propagation blocking assembly disposed between at least a portion of the plurality of battery cells, wherein the thermal propagation blocking assembly may include a thermal insulation layer including silica aerogel; a fireproof sheet disposed on a first surface of the thermal insulation layer, and a second fireproof sheet disposed on a second surface of the thermal insulation layer, opposite to the first surface; and a buffer member including a first buffer pad disposed on the first fireproof sheet and a second buffer pad disposed on the second fireproof sheet.

Aspect 2) In Aspect 1, the thermal propagation blocking assembly may include a support member, including a receiving space for accommodating the thermal insulation layer, the fireproof member, and the buffer member, and a frame surrounding the receiving space.

Aspect 3) In Aspect 2, the support member may include a protrusion extending from the frame, and surrounding edges of the thermal insulation layer, the fireproof member, and the buffer pad.

Aspect 4) In Aspect 2 or Aspect 3, the support member may include a buffer space formed inside the frame.

Aspect 5) In Aspect 2 or Aspect 3, the support member may include at least one of polyvinyl chloride, natural rubber, ethylene propylene, nitrile rubber, and polychloroprene.

Aspect 6) In any one of Aspect 1 to Aspect 5, first thermal conductivity of the thermal insulation layer may be lower than second thermal conductivity of the fireproof member.

Aspect 7) In any one of Aspect 1 to Aspect 6, the first thermal conductivity of the thermal insulation layer may be less than 0.02 W/mK, and the second thermal conductivity of the fireproof member may be less than 0.3 W/mK.

Aspect 8) In any one of Aspect 1 to Aspect 7, a first thickness of the thermal insulation layer may be greater than or equal to a second thickness of the first fireproof sheet or the second fireproof sheet.

Aspect 9) In any one of Aspect 1 to Aspect 8, the fireproof member may include mica.

Aspect 10) In any one of Aspect 1 to Aspect 9, the buffer member may include at least one of polyurethane, silicone, or rubber.

Aspect 11) In any one of Aspect 1 to Aspect 10, the thermal propagation blocking assembly may further include an adhesive layer including a first adhesive layer disposed between the first buffer pad and the first fireproof sheet, a second adhesive layer disposed between the first fireproof sheet and the thermal insulation layer, a third adhesive layer disposed between the second fireproof sheet and the thermal insulation layer, and a fourth adhesive layer disposed between the second fireproof sheet and the second buffer pad.

Aspect 12) In any one of Aspect 1 to Aspect 11, each of the plurality of battery cells may include an electrode assembly, and a pouch including an electrode receiving portion for accommodating the electrode assembly, and a sealing portion for sealing at least a portion of the perimeter of the electrode receiving portion, wherein the buffer member may face the electrode receiving portion.

Aspect 13) In any one of Aspect 1 to Aspect 12, the thermal propagation blocking assembly may surround at least a portion of each of the plurality of battery cells.

Aspect 14) A thermal propagation blocking assembly may include a thermal insulation layer including silica aerogel; a fireproof member including a first fireproof sheet covering a first surface of the thermal insulation layer, and a second fireproof sheet covering a second surface of the thermal insulation layer, opposite to the first surface; and a buffer member including a first buffer pad covering the first fireproof sheet, and a second buffer pad covering the second fireproof sheet.

Aspect 15) In Aspect 14, a support member, including a receiving space for accommodating the thermal insulation layer, the fireproof member, and the buffer member, and a frame surrounding the receiving space, may be further included, wherein the support member may include a protrusion extending from the frame, and surrounding edges of the thermal insulation layer, the fireproof member, and the buffer pad.

Aspect 16) In any one of Aspect 14 or Aspect 15, first thermal conductivity of the thermal insulation layer may be lower than second thermal conductivity of the fireproof member.

Aspect 17) In any one of Aspect 14 to Aspect 16, the first thermal conductivity of the thermal insulation layer may be less than 0.02 W/mK, and the second thermal conductivity of the fireproof member may be less than 0.3 W/mK.

Aspect 18) In any one of Aspect 14 to Aspect 17, fireproof member may include mica.

Aspect 19) In any one of Aspect 14 to Aspect 18, an adhesive layer, including a first adhesive layer disposed between the first buffer pad and the first fireproof sheet, a second adhesive layer disposed between the first fireproof sheet and the thermal insulation layer, a third adhesive layer disposed between the second fireproof sheet and the thermal insulation layer, and a fourth adhesive layer disposed between the second fireproof sheet and the second buffer pad, may be further included.

Aspect 20) A battery pack may include at least one battery module; and a pack frame accommodating the at least one battery module, wherein the at least one battery module may include a plurality of battery cells and a thermal propagation blocking assembly disposed between at least a portion of the plurality of battery cells, wherein the propagation blocking assembly may include a thermal insulation layer including silica aerogel; a fireproof member including a first fireproof sheet covering a first surface of the thermal insulation layer, and a second fireproof sheet covering a second surface of the thermal insulation layer, opposite to the first surface; and a buffer member including a first buffer pad covering the first fireproof sheet, and a second buffer pad covering the second fireproof sheet.

## Claims

1. A battery module, comprising:
a plurality of battery cells; and
a thermal propagation blocking assembly disposed between at least a portion of the plurality of battery cells,
wherein the thermal propagation blocking assembly includes
a thermal insulation layer including silica aerogel;
a fireproof member including a first fireproof sheet disposed on a first surface of the thermal insulation layer, and a second fireproof sheet disposed on a second surface of the thermal insulation layer, opposite to the first surface; and
a buffer member including a first buffer pad disposed on the first fireproof sheet, and a second buffer pad disposed on the second fireproof sheet.

2. The battery module of claim 1, wherein the thermal propagation blocking assembly includes a support member including a receiving space for accommodating the thermal insulation layer, the fireproof member, and the buffer member, and a frame surrounding the receiving space.

3. The battery module of claim 2, wherein the support member includes a protrusion extending from the frame, and surrounding edges of the thermal insulation layer, the fireproof member, and the buffer pad.

4. The battery module of claim 2 or 3, wherein the support member includes a buffer space formed inside the frame.

5. The battery module of claim 2 or 3, wherein the support member includes at least one of polyvinyl chloride, natural rubber, ethylene propylene, nitrile rubber, and polychloroprene.

6. The battery module of one of claims 1 to 3, wherein first thermal conductivity of the thermal insulation layer is lower than second thermal conductivity of the fireproof member.

7. The battery module of claim 6, wherein the first thermal conductivity of the thermal insulation layer is less than 0.02 W/mK, and
the second thermal conductivity of the fireproof member is less than 0.3 W/mK.

8. The battery module of one of claims 1 to 3, wherein a first thickness of the thermal insulation layer is greater than or equal to a second thickness of the first fireproof sheet or the second fireproof sheet.

9. The battery module of one of claims 1 to 3, wherein the fireproof member includes mica.

10. The battery module of one of claims 1 to 3, wherein the buffer member includes at least one of polyurethane, silicone, or rubber.

11. The battery module of one of claims 1 to 3, wherein the thermal propagation blocking assembly further includes an adhesive layer including
a first adhesive layer disposed between the first buffer pad and the first fireproof sheet,
a second adhesive layer disposed between the first fireproof sheet and the thermal insulation layer,
a third adhesive layer disposed between the second fireproof sheet and the thermal insulation layer, and
a fourth adhesive layer disposed between the second fireproof sheet and the second buffer pad.

12. The battery module of one of claims 1 to 3, wherein each of the plurality of battery cells includes an electrode assembly, and a pouch including an electrode receiving portion for accommodating the electrode assembly, and a sealing portion for sealing at least a portion of the perimeter of the electrode receiving portion,
wherein the buffer member faces the electrode receiving portion.

13. The battery module of one of claims 1 to 3, wherein the thermal propagation blocking assembly surrounds at least a portion of each of the plurality of battery cells.

14. A thermal propagation blocking assembly, comprising:
a thermal insulation layer including silica aerogel;
a fireproof member including a first fireproof sheet covering a first surface of the thermal insulation layer, and a second fireproof sheet covering a second surface of the thermal insulation layer, opposite to the first surface; and
a buffer member including a first buffer pad covering the first fireproof sheet and a second buffer pad covering the second fireproof sheet.

15. The thermal propagation blocking assembly of claim 14, further comprising:
a support member including a receiving space for accommodating the thermal insulation layer, the fireproof member, and the buffer member, and a frame surrounding the receiving space,
wherein the support member includes a protrusion extending from the frame, and surrounding edges of the thermal insulation layer, the fireproof member, and the buffer pad.

16. The thermal propagation blocking assembly of claim 14 or 15, wherein first thermal conductivity of the thermal insulation layer is lower than second thermal conductivity of the fireproof member.

17. The thermal propagation blocking assembly of claim 16, wherein the first thermal conductivity of the thermal insulation layer is less than 0.02 W/mK, and
the second thermal conductivity of the fireproof member is less than 0.3 W/mK.

18. The thermal propagation blocking assembly of claim 14 or 15, wherein the fireproof member includes mica.

19. The thermal propagation blocking assembly of claim 14 or 15, further comprising: an adhesive layer including,
a first adhesive layer disposed between the first buffer pad and the first fireproof sheet,
a second adhesive layer disposed between the first fireproof sheet and the thermal insulation layer,
a third adhesive layer disposed between the second fireproof sheet and the thermal insulation layer; and
a fourth adhesive layer disposed between the second fireproof sheet and the second buffer pad.

20. A battery pack, comprising:
at least one battery module; and
a pack frame accommodating the at least one battery module,
wherein the at least one battery module includes a plurality of battery cells and a thermal propagation blocking assembly disposed between at least a portion of the plurality of battery cells,
wherein the thermal propagation blocking assembly includes
a thermal insulation layer including silica aerogel;
a fireproof member including a first fireproof sheet covering a first surface of the thermal insulation layer and a second fireproof sheet covering a second surface of the thermal insulation layer, opposite to the first surface; and
a buffer member including a first buffer pad covering the first fireproof sheet and a second buffer pad covering the second fireproof sheet.
